# EUROPEAN PATENT APPLICATION

(11) **EP 4 813 752 A1**
(43) Date of publication of application: **30.09.2026**
(21) Application number: 25203285.9
(22) Date of filing: 19.09.2025
(51) Int. Cl.: B60R 7/04, B60N 3/10, B60R 11/00, B60R 16/023

(54) **WORKING VEHICLE**

(30) Priority: 27.03.2025 JP 2025054161
(71) Applicant: Takeuchi Mfg. Co., Ltd., Nagano 389-0605 (JP)
(72) Inventor: TANAKA, Keisuke, Hanishina-gun, Nagano, 389-0605 (JP); SHIOIRI, Yuichi, Hanishina-gun, Nagano, 389-0605 (JP); KOBAYASHI, Seigo, Hanishina-gun, Nagano, 389-0605 (JP)
(74) Representative: Winter, Brandl - Partnerschaft mbB

(57) **Abstract**

There is provided a working vehicle including a fuse box within which a fuse can be horizontally arranged and which achieves good workability of maintenance and excellent waterproofness and dustproofness. A working vehicle (1) according to the present invention includes a cabin (16) provided with a seat (20) on which an operator sits. The cabin (16) has, inside thereof, a fuse box (60) in which a fuse (70) of an electrical component is accommodated. The fuse box (60) has a main body (60A) whose inside is an accommodation space, in which an opening (60a) for attaching and detaching the fuse (70) is formed at an upper surface of the main body (60A) and a cover (60B) that can open and close in relation to the opening (60a) is provided.

## Description

### Technical Field

The present invention relates to a working vehicle.

### Background Art

As an example of a working vehicle, a hydraulic excavator, a track loader or the like having a lower body with a traveling crawler or tire installed thereon, an upper body arranged above the lower body, and a working device installed at the lower body or the upper body and operating hydraulically (that is, with hydraulic oil having a predetermined pressure) is known according to the related art.

Recently, a working vehicle having an electric motor instead of a traditional engine as a drive source of a working device has been developed (refer to JP-A-2023-23324).

### Summary of Invention

### Technical Problem

Normally, as the working vehicle becomes smaller, the space where a device is installed becomes narrower. Therefore, the configuration and arrangement of the device and the securing of an installation space therefor are persistent problems.

In the presence of such problems, particularly in a working vehicle with a configuration having an electric motor or a configuration having an air-conditioning device (an air conditioner or a heater) or the like, the number of electrical devices installed increases and the number of fuses for these electrical devices tends to increase accordingly. Although each single fuse is small, as the number of fuses increases, the configuration and arrangement of a fuse box for accommodating the fuses and the securing of an installation space therefor become more significant problems.

Also, since the entry and attachment of water or dust to the fuse and the connection terminal causes a malfunction, the fuse box needs to be highly waterproof and dustproof.

Moreover, the fuse is a component on which maintenance (inspection, and attachment and detachment) is performed at a high frequency, and therefore needs to have a configuration and arrangement that enables good workability of maintenance.

### Solution to Problem

The present invention has been accomplished under the above-described circumstances and an object thereof is to provide a working vehicle having a fuse box within which a fuse can be horizontally arranged and which achieves good workability of maintenance and excellent waterproofness and dustproofness.

The present invention solves the above-described problems by a solution as described below as an embodiment.

A working vehicle according to an embodiment is a working vehicle including a cabin provided with a seat on which an operator sits, and the cabin has, inside thereof, a fuse box in which a fuse of an electrical component is accommodated, and the fuse box has a main body whose inside is an accommodation space, in which an opening for attaching and detaching the fuse is formed at an upper surface of the main body, and a cover that can open and close in relation to the opening is provided.

### Advantageous Effects of Invention

In the working vehicle according to the embodiment, a fuse box within which a fuse can be horizontally arranged and which achieves good workability of maintenance and excellent waterproofness and dustproofness can be provided.

### Brief Description of Drawings

Fig. 1 is a perspective view showing an example of a working vehicle according to an embodiment of the present invention.
Fig. 2 is a perspective view showing an example of a cabin of the working vehicle shown in Fig. 1.
Fig. 3 is a perspective view showing an example of the cabin of the working vehicle shown in Fig. 1.
Fig. 4 is a perspective view showing an example of a fuse box in the cabin of the working vehicle shown in Fig. 1.
Fig. 5 is an enlarged view of a V part in Fig. 4.
Fig. 6 is a plan view showing an example of the cabin of the working vehicle shown in Fig. 1.
Fig. 7 is a perspective view showing another example of the fuse box in the cabin of the working vehicle shown in Fig. 1.
Fig. 8 is a perspective view (enlarged view of the same position as in Fig. 5) showing another example of the fuse box in the cabin of the working vehicle shown in Fig. 1.

### Description of Embodiments

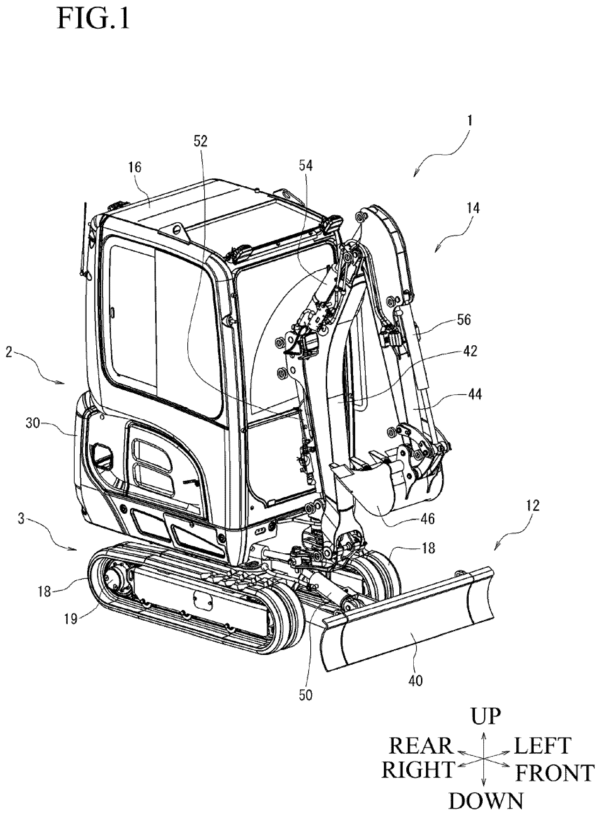

Hereinafter, an embodiment of the present invention will be described in detail with reference to the drawings. Fig. 1 is a schematic view (perspective view from above a right front part) showing an example of a working vehicle 1 according to the present embodiment. For the sake of convenience of description, there are cases where upward and downward, left and right, and forward and backward directions are indicated by arrows in the drawings. Also, there are cases where members having the same function are denoted by the same sign in all the drawings for illustrating the embodiment and the repeated description thereof is omitted.

First, the overall configuration of the working vehicle 1 will be described. A hydraulic excavator will be described as an example of the working vehicle 1. However, the working vehicle 1 is not limited to the hydraulic excavator.

As shown in Fig. 1, the working vehicle 1 has a lower body 3 provided with a traveling device, and an upper body 2 arranged above the lower body 3. This working vehicle 1 has working devices 12, 14 that operate hydraulically (with hydraulic oil having a predetermined pressure). Also, a cabin 16 provided with an operation device with which an operator on board carries out operations for traveling and work is provided. The cabin 16 is assumed to be a closed type (cabin) but may also be an open type (canopy).

As an example of the traveling device, a pair of left and right crawlers 18 are provided. However, the traveling device is not limited to the crawlers 18 and may employ a configuration having tires instead of the crawlers 18 (not illustrated). The crawlers 18 are driven by a traveling hydraulic motor 19.

As an example of the working device 12, a blade 40 is provided. The blade 40 is installed at the lower body 3 so as to be able to swing upward and downward (including forward and backward components). The blade 40 is driven by a hydraulic cylinder (blade cylinder) 50. However, the working device 12 is not limited to the above-described configuration.

As an example of the working device 14, a boom 42, an arm 44, and an attachment (in the present embodiment, a bucket) 46 are provided. However, the attachment 46 is not limited to the bucket. The boom 42 is installed at the upper body 2 so as to be able to swing upward and downward (including forward and backward components) (a boom bracket may or may not be provided in between). The arm 44 is installed at the boom 42 so as to be able to swing upward and downward (including forward and backward components). The attachment 46 is installed at the arm 44 so as to be able to swing upward and downward (including forward and backward components). The boom 42 is driven by a hydraulic cylinder (boom cylinder) 52. The arm 44 is driven by a hydraulic cylinder (arm cylinder) 54. The attachment 46 is driven by a hydraulic cylinder (bucket cylinder) 56. However, the working device 14 is not limited to the above-described configuration.

The working vehicle 1 has a drive source, a hydraulic pump, and a control valve or the like (none of which is illustrated) inside a device compartment 30, as a drive mechanism for driving the above-described traveling hydraulic motor 19 and hydraulic cylinders 50, 52, 54, 56. One or a plurality of hydraulic pumps are provided in accordance with the configurations, loads and the like of the working devices 12, 14 and the traveling device or the like.

In the working vehicle 1 having the above-described configuration, the operator operates operation devices 22, 24 or the like and thus performs control to activate the control valve to supply hydraulic oil with a predetermined pressure sent out from the hydraulic pump to the traveling hydraulic motor 19 and the hydraulic cylinders 50, 52, 54, 56. Thus, the traveling of the working vehicle 1 and the work by the working devices 12, 14 can be performed.

The working vehicle 1 has an electric motor as the above-described drive source (not illustrated). As another example of the drive source, a configuration in which an engine (internal combustion engine) is provided instead of the electric motor or along with the electric motor may be employed (not illustrated).

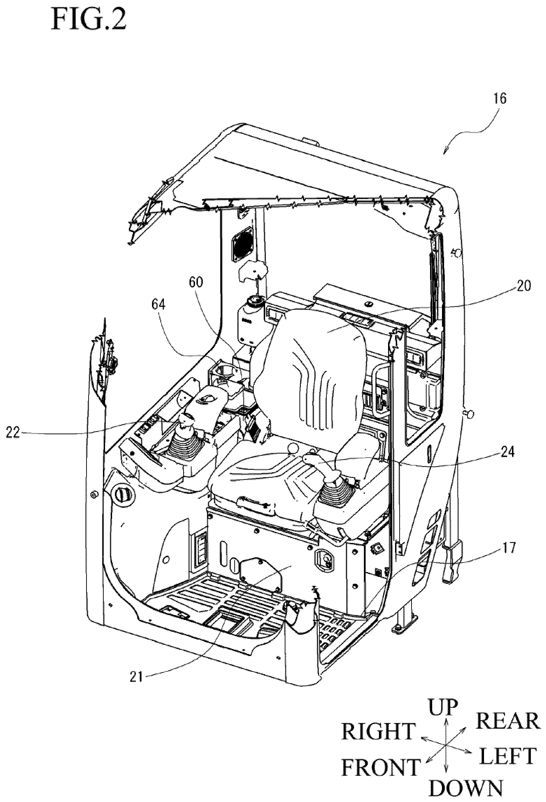

Next, the configuration of the cabin 16 will be described. Fig. 2 is a perspective view (perspective view from above a left front part) of the inside of the cabin 16. The cabin 16 has a seat 20 on which the operator sits. This seat 20 is installed above a seat box 21 fixed to a floor plate 17. Also, the various operation devices 22, 24 (major operation devices are denoted by signs) with which the operator performs operations for work and traveling or the like are provided.

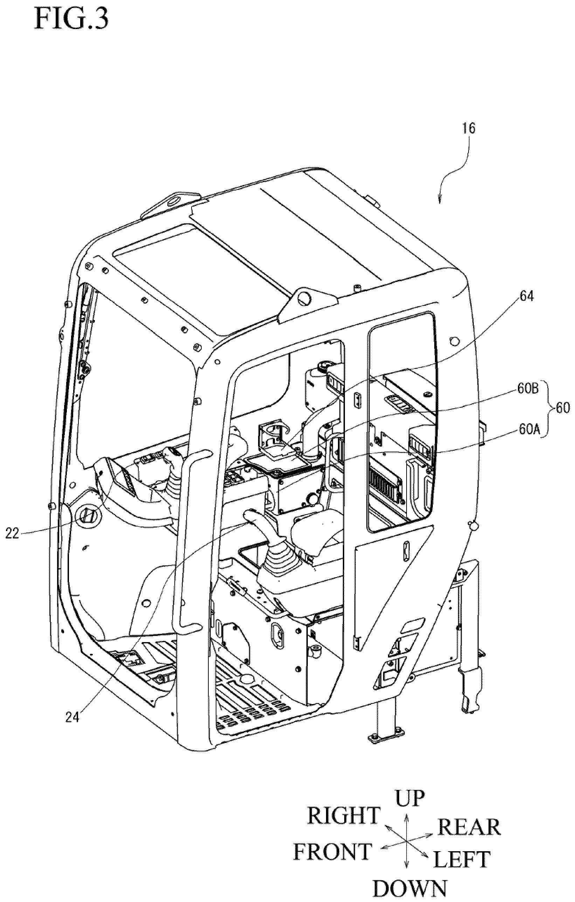

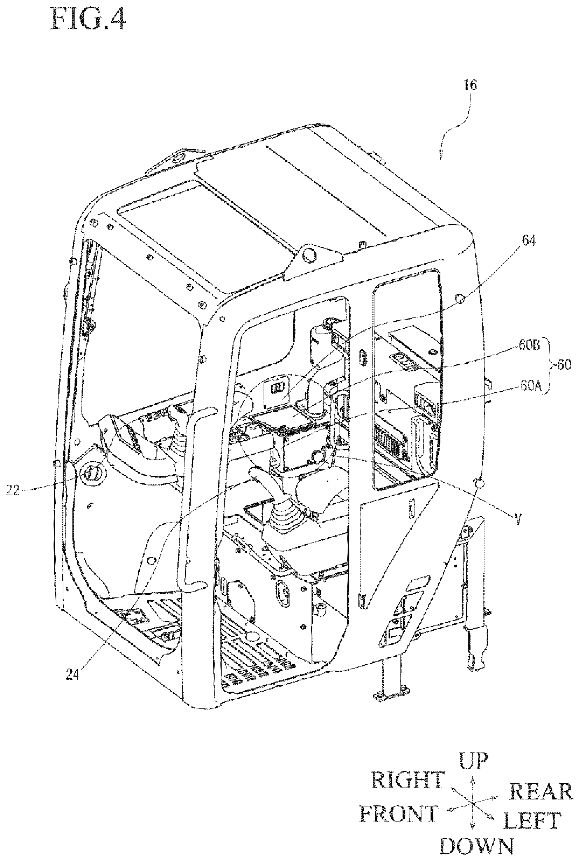

As equipment for the operator, the cabin 16 has a folding drink holder 64 in which the operator places a drink to drink. Fig. 3 is a perspective view (perspective view from above a left front part) of the inside of the cabin 16 in a state where the drink holder 64 is expanded (a state where a drink can be placed), and Fig. 4 is a perspective view (perspective view from above a left front part) of the inside of the cabin 16 in a state where the drink holder 64 is folded (a state where a drink cannot be placed).

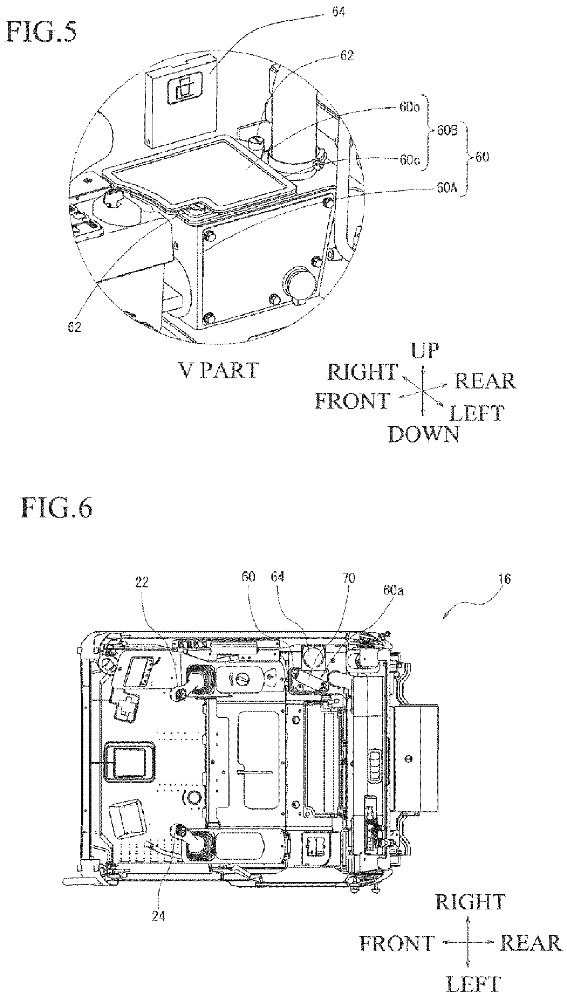

Also, the cabin 16 has a fuse box 60 within which a fuse 70 for an electrical component is accommodated. The target electrical component is not particularly limited but is, for example, a heater device or the like of the cabin 16. Fig. 5 is an enlarged view of the fuse box 60 (enlarged view of a V part in Fig. 4), and Fig. 6 is a plan view of the inside of the cabin 16 (a state where a cover 60B (described later) of the fuse box 60 is removed). The fuse 70 in Fig. 6 is illustrated as an aggregate state where a plurality of fuses (in some case, a distinction is made by referring to a fuse as a "single fuse") are connected to corresponding terminals, respectively (a state where the fuses are collectively arranged in a socket case) (though the number of single fuses, and the presence or absence of a socket case and the number of socket cases are not particularly limited).

The fuse box 60 according to the present embodiment has a box-shaped main body 60A whose inside is an accommodation space, as shown in Fig. 5 and Fig. 6. Also, an opening 60a through which to perform an inspection and attachment or detachment of the fuse 70 is formed at an upper surface of the main body 60A, and the cover 60B that can open and close (in the present embodiment, attachable and detachable) in relation to the opening 60a is provided. As an example, the cover 60B is attached to the fuse box 60, using a manually turnable screw (knurled screw or the like) 62. Thus, the cover 60B can be attached and detached by manually turning the screw 62 without using a turning tool (screwdriver, wrench or the like) and therefore the work becomes extremely easy. The attachment and detachment structure of the cover 60B is not limited to the above. For example, instead of the attachment and detachment structure, a structure for opening and closing the opening 60a by a slide mechanism or a hinge mechanism or the like may be employed (not illustrated).

In the case of a configuration in which an opening is formed at a lateral surface of a fuse box with a cover attached thereto, as in the related-art working vehicle, detaching the cover from the fuse box and visually checking the inside from the lateral side, and performing the inspection and the attachment and detachment of the fuse, are tasks that are very difficult to carry out and take a lot of effort for reasons such as the narrow space inside the cabin and the presence of little space around the seat. However, with the above-described configuration, since the opening 60a is formed at the upper surface of the fuse box 60, the following remarkable effects can be achieved. That is, the fuse 70 can be horizontally arranged inside the fuse box 60, and the worker can visually check the inside of the fuse box 60 from above and can carry out the inspection and the attachment and detachment of the fuse 70. Therefore, these tasks can be carried out very easily and securely. The "horizontal arrangement" refers to a configuration in which something is arranged parallel to a plane along forward, backward, left, and right directions in the working vehicle 1 (that is, a configuration in which the direction of attachment and detachment is upward and downward directions).

Also, in the case of a configuration in which an opening is formed at a lateral surface of a fuse box with a cover attached thereto, as in the related-art working vehicle, when the cover is removed, the problem of the cover or the screw falling in a narrow gap inside the cabin may occur. However, the above-described configuration has an effect in that such falling does not occur (or is unlikely to occur).

Moreover, since a position around the seat is a narrow space where operation devices are densely arranged, even if by any chance a fuse box having a configuration in which an opening is formed at a lateral surface with a cover attached thereto as in the related art can be arranged, the inspection and the attachment and detachment of the fuse cannot be carried out (or are difficult) in many cases. However, with the above-described configuration, since the inspection and the attachment and detachment of the fuse 70 can be carried out even in a narrow space, a configuration in which the fuse box 60 is arranged at a position around the seat 20 can be implemented.

Also, the fuse box 60 according to the present embodiment is arranged at a lower position in relation to the drink holder 64 (but not limited to this configuration). Thus, the limited space inside the cabin 16 can be effectively utilized. Also, in the case of a configuration in which an opening is formed at a lateral surface of a fuse box with a cover attached thereto, as in the related-art working vehicle, if a drink (moisture) placed in the drink holder 64 is spilt, a problem may occur in that the moisture can easily enter from the attachment part (boundary part with the main body) of the cover 60B into the inside of the fuse box 60. However, with the above-described configuration, the opening 60a is formed at the upper surface and the cover 60B is attached so as to cover this opening 60a, thus having an effect in that such entry of moisture does not occur (or is unlikely to occur). That is, the fuse box 60 with excellent waterproofness and dustproofness can be implemented.

Also, the fuse box 60 according to the present embodiment is provided with a placement part 60b where the operator places an object to use, at an upper surface, and is configured to be also used as a stand. Since a position around the seat is normally a narrow space where operation devices are densely arranged, a stand cannot be installed (or is difficult to install) in many cases. However, with the configuration in which the cover 60B provided at the upper part of the fuse box 60 is also used as a stand, a stand can be provided at a position around the seat 20 and the convenience for the operator can be significantly improved.

As an example, the placement part 60b is formed using a rubber or an elastomer. Thus, even if vibration or tilting occurs at the time of work, an object placed at the placement part 60b can be prevented from slipping off and the object placed at the placement part 60b can be prevented from making a rattling sound due to the vibration.

Also, the placement part 60b has a configuration having an edge part 60c in a shape erecting at the peripheral edge of a predetermined area (in the present embodiment, the entire area of the placement part 60b but may be a part of the area), that is, in a shape formed like a step protruding upward. Thus, even if vibration or tilting occurs at the time of work, the object placed at the placement part 60b is caught by the edge part 60c and this has an effect in that the object is less likely to fall. Therefore, this configuration is suitable particularly in the case of placing a pen or the like with a circular cross section, which can easily roll over.

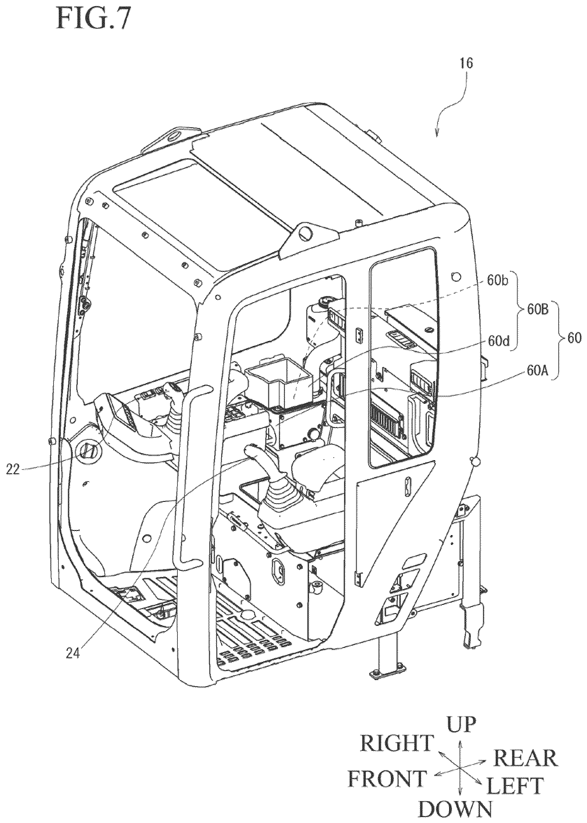

As another example, as shown in Fig. 7, the placement part 60b may have a configuration having a wall part 60d in a shape erecting at the peripheral edge of a predetermined area (in the present embodiment, the entire area of the placement part 60b but may be a part of the area), that is, in a shape formed like a wall extending upward. This has an effect in that a long object such as a pen or a smartphone can be stored more easily.

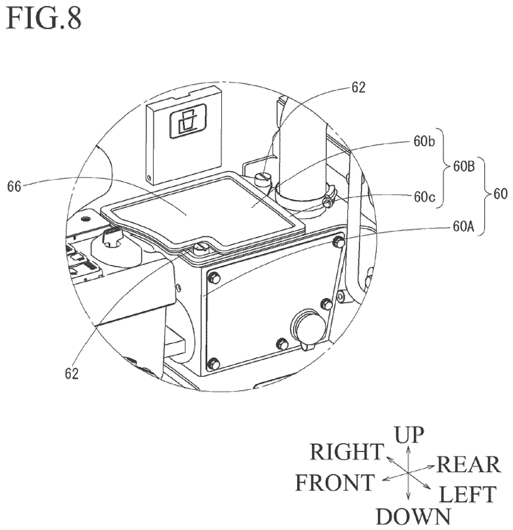

As still another example, the placement part 60b may have a configuration having a magnet that applies an attractive magnetic force to the placed object (configuration having magnetism) (see Fig. 8). For example, a configuration in which a plate-shaped magnet 66 is arranged at the upper surface, the lower surface, or the inside of this placement part 60b can be employed. Thus, if the object placed at the placement part 60b has a part to be attracted to the magnet, even if vibration or tilting occurs at the time of work, the object placed at the placement part 60b can be prevented from slipping off and the object placed at the placement part 60b can be prevented from making a rattling sound due to the vibration.

The other mechanisms for traveling and work in the working vehicle 1 according to the present embodiment are similar to those in a known working vehicle (hydraulic excavator) and therefore the detailed description thereof is omitted.

As described above, it is preferable that the present invention includes the configurations given below.
(1) A working vehicle according to an embodiment is a working vehicle including a cabin provided with a seat on which an operator sits, and the cabin has, inside thereof, a fuse box in which a fuse of an electrical component is accommodated, and the fuse box has a main body whose inside is an accommodation space, in which an opening for attaching and detaching the fuse is formed at an upper surface of the main body, and a cover that can open and close in relation to the opening is provided.
(2) In the working vehicle according to the above aspect (1), it is preferable that the fuse box is arranged at a position around the seat.
(3) In the working vehicle according to the above aspect (1) or (2), it is preferable that the cover is provided with a placement part where an object is to be placed on an upper surface, and is configured to be used also as a stand.
(4) In the working vehicle according to the above aspect (3), it is preferable that the placement part is formed using a rubber or an elastomer.
(5) In the working vehicle according to the above aspect (3) or (4), it is preferable that the placement part has an edge part formed in a step-like shape protruding upward at a peripheral edge of a predetermined area.
(6) In the working vehicle according to any one of the above aspects (3) to (5), it is preferable that the placement part has a wall part formed in a wall-like shape extending upward at a peripheral edge of a predetermined area.
(7) In the working vehicle according to any one of the above aspects (3) to (6), it is preferable that the placement part has magnetism.
(8) In the working vehicle according to any one of the above aspects (1) to (7), it is preferable that the cabin has a drink holder in which a drink is to be placed and that the fuse box is arranged at a lower position in relation to the drink holder.
(9) In the working vehicle according to any one of the above aspects (1) to (8), it is preferable that the cover is attached to the main body in an attachable and detachable manner, using a manually turnable screw.

According to the present invention, the fuse can be horizontally arranged inside the fuse box, and the inside thereof can be visually checked and the maintenance (inspection, and attachment and detachment of the fuse) can be carried out from above. Therefore, the fuse box can be arranged in a narrow space at a position around the seat inside the cabin, and the maintenance work can be carried out very easily and securely. Moreover, in the attachment structure of the cover in relation to the opening, higher waterproofness and dustproofness can be achieved.

Therefore, in the case where the number of electrical devices installed increases and the number of fuses increases, or in the case where the working vehicle is reduced in size, or the like, a space for installing the fuse box for accommodating fuses can be secured inside the cabin (particularly around the seat).

The present invention is not limited to the above-described embodiment (hydraulic excavator). For example, while a hydraulic excavator has been described as an example of the working vehicle, the present invention can be similarly applied to other working vehicles (track loader or the like) having a cabin. Also, while a configuration in which a fuse box is arranged inside a cabin has been described as an example, the present invention can be similarly applied to a configuration in which a fuse box is arranged inside a device compartment.

## Claims

1. A working vehicle (1) comprising a cabin (16) provided with a seat (20) on which an operator sits, wherein
the cabin (16) has, inside thereof, a fuse box (60) in which a fuse (70) of an electrical component is accommodated, and
the fuse box (60) has a main body (60A) whose inside is an accommodation space, in which an opening (60a) for attaching and detaching the fuse (70) is formed at an upper surface of the main body (60A), and a cover (60B) configured to open and close is provided to the opening (60a).

2. The working vehicle (1) according to claim 1, wherein
the fuse box (60) is arranged around the seat (20).

3. The working vehicle (1) according to claim 1 or 2, wherein
the cover (60B) is provided with a placement part (60b) where an object is to be placed on an upper surface, and is configured to be used also as a stand.

4. The working vehicle (1) according to claim 3, wherein
the placement part (60b) is formed of a rubber or an elastomer.

5. The working vehicle (1) according to claim 3 or 4, wherein
the placement part (60b) has an edge part (60c) formed in a step-like shape protruding upward at a peripheral edge of a predetermined area.

6. The working vehicle (1) according to any one of claims 3 to 5, wherein
the placement part (60b) has a wall part (60d) formed in a wall-like shape extending upward at a peripheral edge of a predetermined area.

7. The working vehicle (1) according to any one of claims 3 to 6, wherein
the placement part (60b) has magnetism.

8. The working vehicle (1) according to any one of claims 1 to 7, wherein
the cabin (16) has a drink holder (64) in which a drink bottle is to be placed, and
the fuse box (60) is arranged at a lower position in relation to the drink holder (64).

9. The working vehicle (1) according to any one of claims 1 to 8, wherein
the cover (60B) is attached to the main body (60A) in an attachable and detachable manner, using a manually turnable screw (62).
